# EUROPÄISCHE PATENTANMELDUNG

(11) **EP 3 406 933 A1**
(43) Veröffentlichungstag der Anmeldung: **28.11.2018**
(21) Anmeldenummer: 17172634.2
(22) Anmeldetag: 24.05.2017
(51) Int. Cl.: F16H 1/16, F16H 57/039

(54) **GETRIEBEANORDNUNG FÜR HILFSANTRIEB SOWIE MOTOR-GETRIEBE-VERBINDUNGSANORDNUNG IN EINEM FAHRZEUG, INSBESONDERE IN EINEM KRAFTFAHRZEUG**

(71) Anmelder: IMS Gear SE & Co. KGaA, 78166 Donaueschingen (DE)
(72) Erfinder: Fechler, Jens, 78183 Hüfingen (DE); Kieninger, Matthias, 78089 Unterkirnach (DE); Koop, Matthias, 78166 Donaueschingen (DE); Süß, Marius, 78176 Hondingen (DE); Synovzik, Wilfried, 78183 Hüfingen (DE)
(74) Vertreter: Westphal, Mussgnug & Partner Patentanwälte mbB

(57) **Zusammenfassung**

Die vorliegende Erfindung betrifft eine Getriebeanordnung für Hilfsantriebe (10) in einem Fahrzeug (76), insbesondere einem Kraftfahrzeug, umfassend eine mit einem Antriebsmotor (12) verbindbare Antriebswelle (18), auf welcher ein Antriebswellen-Verzahnungsabschnitt (30) angeordnet ist, zumindest eine Zwischenwelle (32), auf welcher ein erster Zwischenwellen-Verzahnungsabschnitt (38), der mit dem Antriebswellen-Verzahnungsabschnitt (30) in kämmendem Eingriff steht, und ein zweiter Zwischenwellen-Verzahnungsabschnitt (40) angeordnet ist, und ein Abtriebsrad (20) mit einem Abtriebsrad-Verzahnungsabschnitt (42), der mit dem zweiten Zwischenwellen-Verzahnungsabschnitt (40) in kämmendem Eingriff steht, wobei das Abtriebsrad (20) mit zumindest einer Abtriebswelle (22) drehfest verbindbar ist. Zudem betrifft die Erfindung einen Hilfsantrieb (10) mit einer derartigen Getriebeanordnung (16) sowie ein Fahrzeug, insbesondere ein Kraftfahrzeug, welches einen derartigen Hilfsantrieb (10) aufweist. Darüber hinaus betrifft die Erfindung eine Motor-Getriebe-Verbindungsanordnung (100) insbesondere zur Verwendung in einem Fahrzeug (76).

## Beschreibung

Die vorliegende Erfindung betrifft eine Getriebeanordnung für Hilfsantriebe in einem Fahrzeug, insbesondere einem Kraftfahrzeug. Ferner betrifft die vorliegende Erfindung einen Hilfsantrieb in einem Fahrzeug mit einer derartigen Getriebeanordnung sowie ein Fahrzeug mit einem derartigen Hilfsantrieb. Darüber hinaus betrifft die Erfindung eine Motor-Getriebe-Verbindungsanordnung insbesondere zur Verwendung in einem Fahrzeug.

Im Zuge der Erhöhung des Komforts in Fahrzeugen werden immer mehr Bewegungen zwischen zwei Bauteilen des Fahrzeugs, die in der Vergangenheit manuell von den Fahrzeuginsassen bewerkstelligt worden, von Motoren, insbesondere von Elektromotoren, ausgeführt. Wurden in älteren Fahrzeugen die Fensterscheiben und Schiebedächer durch Drehen einer Kurbel manuell geöffnet und geschlossen, werden hierzu heutzutage nahezu ausnahmslos elektromotorische Fensterheber und Schiebedächer eingesetzt. Mehr und mehr setzen sich elektrisch verstellbare Heckklappen durch, mit welchen sich die Heckklappen per Knopfdruck automatisch öffnen und schließen lassen. Weiterhin nimmt die Anzahl von Assistenz- und Sicherheitssystemen immer weiter zu, so dass der ohnehin schon begrenzte Bauraum im Fahrzeug immer knapper wird. Die Problematik des begrenzten Bauraums wird mit der fortschreitenden Elektrifizierung der Fahrzeuge weiter zunehmen, da die Akkus zum Speichern von elektrischer Energie eine vergleichsweise geringe Energiedichte aufweisen und daher viel Platz benötigen.

Die Antriebe für Fensterheber, Schiebedächer, elektrisch verstellbare Heckklappen etc. werden auch als Hilfsantriebe für Fahrzeuge bezeichnet. Allgemein ausgedrückt wird mit ihnen ein Bauteil des Fahrzeugs gegenüber einem anderen Bauteil relativ bewegt. Hilfsantriebe sind aber nicht dafür geeignet, das Fahrzeug als solches zu bewegen. Bei vielen Hilfsantrieben wird ein Elektromotor als Antriebsquelle verwendet, der üblicherweise die mit ihm verbundene Antriebswelle mit einer vergleichsweise hohen Drehzahl antreibt. Die hieraus resultierende Geschwindigkeit, mit welcher das zu betreffende Bauteil bewegt wird, ist häufig höher als erwünscht. Beispielsweise aus Gründen der Sicherheit und des Verschleißes ist man häufig daran interessiert, das betreffende Bauteil mit einer relativ langsamen Geschwindigkeit zu bewegen. Weiterhin reicht das vom Elektromotor bereitgestellte Drehmoment für einige Anwendungen nicht aus. Folglich muss ein Getriebe eingesetzt werden, um die Geschwindigkeit zu reduzieren und das Drehmoment zu erhöhen. Allerdings nehmen auch Getriebe den knapp bemessenen Bauraum in Anspruch. In vielen Fällen wächst der vom Getriebe eingenommene Bauraum mit dem Übersetzungsverhältnis.

Aufgabe einer Ausführungsform der vorliegenden Erfindung ist es daher, eine Getriebeanordnung zu schaffen, mit welcher auf wenig Bauraum hohe Übersetzungsverhältnisse realisiert werden können. Weiterhin ist es Aufgabe einer Ausgestaltung der Erfindung, einen Hilfsantrieb zu schaffen, der mit einem hohen Übersetzungsverhältnis betrieben werden kann und der wenig Bauraum beansprucht.

Diese Aufgabe wird mit den in den Ansprüchen 1, 4 und 11 angegebenen Merkmalen gelöst. Vorteilhafte Ausführungsformen sind Gegenstand der Unteransprüche.

Eine Ausführungsform der Erfindung betrifft eine Getriebeanordnung für Hilfsantriebe in einem Fahrzeug, insbesondere einem Kraftfahrzeug, umfassend eine mit einem Antriebsmotor verbindbare Antriebswelle, auf welcher ein Antriebswellen-Verzahnungsabschnitt angeordnet ist, zumindest eine Zwischenwelle, auf welcher ein erster Zwischenwellen-Verzahnungsabschnitt, der mit dem Antriebswellen-Verzahnungsabschnitt in kämmendem Eingriff steht, und ein zweiter Zwischenwellen-Verzahnungsabschnitt angeordnet ist, und ein Abtriebsrad mit einem Abtriebsrad-Verzahnungsabschnitt, der mit dem zweiten Zwischenwellen-Verzahnungsabschnitt in kämmendem Eingriff steht, wobei das Abtriebsrad mit zumindest einer Abtriebswelle drehfest verbindbar ist.

Es sind Getriebeanordnungen in Form von Schneckengetrieben bekannt, bei welcher auf der Antriebswelle ein Schneckenabschnitt angeordnet ist, der mit einem Schneckenrad in Eingriff steht. Das Schneckenrad ist mit der Abtriebswelle verbunden. Mit derartigen Schneckengetrieben lassen sich innerhalb eines relativ geringen Bauraums hohe Übersetzungsverhältnisse realisieren. Das Übersetzungsverhältnis von Schneckengetrieben kann dadurch erhöht werden, dass der Durchmesser des Schneckenrads erhöht wird. Es gibt aber Anwendungen, bei denen der zur Verfügung stehende Bauraum nicht ausreicht, um ein Schneckenrad mit einem entsprechend großen Durchmesser unterzubringen. Die vorschlagsgemäße Getriebeanordnung schafft durch die Verwendung einer Zwischenwelle Abhilfe. Auf der Zwischenwelle ist der erste Zwischenwellen-Verzahnungsabschnitt angeordnet, der mit dem Antriebswellen-Verzahnungsabschnitt kämmt. Weiterhin ist auf der Zwischenwelle der zweite Zwischenwellen-Verzahnungsabschnitt angeordnet, der mit dem Abtriebsrad-Verzahnungsabschnitt des Abtriebsrads kämmt. Es wird folglich ein zweistufiges Getriebe geschaffen, wobei die Zwischenwelle zu einer deutlichen Erhöhung des Übersetzungsverhältnisses beiträgt, wobei der Durchmesser des Abtriebsrads gering gehalten werden kann, wie auch der Durchmesser des ersten Schneckenradabschnitts auf der Zwischenwelle. Insofern kann eine sehr kompakte Getriebeanordnung bereitgestellt werden, die hohe Übersetzungsverhältnisse unter Verwendung von wenig Bauraum zur Verfügung stellt.

Zwar lassen sich hohe Übersetzungsverhältnisse auch mittels Planetengetrieben auf engem Raum realisieren, allerdings weisen Planetengetriebe eine hohe Geräuschentwicklung auf. Die Verwendung einer Zwischenwelle lässt Verzahnungsgeometrien zu, welche eine im Vergleich zu Planetengetrieben geringere Geräuschentwicklung aufweisen.

Bei einer weitergebildeten Ausführungsform verlaufen die Antriebswelle und die Abtriebswelle parallel und versetzt zueinander. Bei einem Schneckengetriebe verlaufen die Antriebswelle und die Abtriebswelle senkrecht und versetzt zueinander. In einigen Fällen steht relativ viel Bauraum in eine Richtung zur Verfügung, nicht aber in eine senkrecht hierzu verlaufende Richtung. Die Verwendung der Zwischenwelle ermöglicht es, die Abtriebswelle parallel zur Antriebswelle auszurichten, wobei der Abstand der Abtriebswelle zur Antriebswelle relativ klein gehalten werden kann. In dieser Ausführungsform kann die radiale Erstreckung der Getriebeanordnung gering gehalten werden, so dass sich diese Ausführungsform besonders dann anbietet, wenn der Bauraum in einer Richtung relativ groß ist, nicht aber in einer hierzu senkrechten oder radialen Richtung.

Nach Maßgabe einer weiteren Ausführungsform umfasst die Getriebeanordnung ein Getriebegehäuse, in welchem die Antriebswelle, die Zwischenwelle und das Abtriebsrad jeweils mit zumindest einem Axiallager axial gelagert sind, wobei die Axiallager Vorspannmittel umfassen, um die Antriebswelle, die Zwischenwelle und/oder das Abtriebsrad axial vorzuspannen. Um die Getriebeanordnung montieren zu können, ist ein gewisses Spiel zwischen den Verzahnungsabschnitten notwendig. Aufgrund der Verwendung der Zwischenwelle und der damit einhergehenden Erhöhung der Anzahl der Verzahnungsabschnitte addiert sich das Spiel innerhalb der Getriebeanordnung. Ebenfalls in der Verwendung der Zwischenwelle begründet werden Axialkräfte in den Verzahnungsabschnitten übertragen. Dies hat zur Folge, dass sich aufgrund des Spiels die Antriebswelle, die Zwischenwelle und das Abtriebsrad abhängig von der Drehrichtung axial etwas in eine Richtung verschieben. Der Zahn des antreibenden Verzahnungsabschnitts greift in die Lücke ein, welche von einem ersten und einem zweiten, benachbart zueinander angeordneten Zahn des angetriebenen Verzahnungsabschnitts gebildet wird. Dabei werden die Axialkräfte über ein Zahnflankenpaar übertragen, an dem der Zahn des antreibenden Verzahnungsabschnitts beispielsweise mit dem ersten Zahn des angetriebenen Verzahnungsabschnitts in Kontakt steht. Wird die Drehrichtung umgekehrt, so löst sich das Zahnflankenpaar auf und es bildet sich ein neues Zahnflankenpaar zwischen dem Zahn des antreibenden Verzahnungsabschnitts und dem zweiten Zahn des angetriebenen Verzahnungsabschnitts. Aufgrund des Spiels tritt ein gewisser Leerlauf auf, in welchem der Zahn des antreibenden Verzahnungsabschnitts weder mit dem erste noch mit dem zweiten Zahn in Kontakt steht. Beim Anschlagen an den ersten oder zweiten Zahn kommt es zu einer unerwünschten Geräuschentwicklung. Wie erwähnt, weist die vorschlagsgemäße Getriebeanordnung relativ viele Verzahnungsabschnitte auf, so dass bei einer Umkehr der Drehrichtung die Geräuschentwicklung entsprechend stärker ausfällt.

Aufgrund der Tatsache, dass in den Verzahnungsabschnitten axiale Kräfte übertragen werden, kann die Geräuschentwicklung aufgrund der Vorspannmittel der Axiallager reduziert werden. Die Vorspannmittel weisen eine gewisse Elastizität auf, mit welcher die axiale Verschiebbarkeit der Antriebswelle, der Zwischenwelle und des Abtriebsrads gedämpft und der Leerlauf reduziert werden. Der Anschlag des Zahns des antreibenden Verzahnungsabschnitts an den ersten oder zweiten Zahn des angetriebenen Verzahnungsabschnitts wird vom Vorspannmittel gedämpft, wodurch die Geräuschentwicklung reduziert wird.

Eine Ausgestaltung der Erfindung betrifft einen Hilfsantrieb in einem Fahrzeug, insbesondere in einem Kraftfahrzeug, umfassend eine Getriebeanordnung nach einem der vorherigen Ausführungsformen, einen Antriebsmotor, der mit der Antriebswelle verbunden ist, und zumindest eine Abtriebswelle, die mit einem proximalen Ende drehfest mit den Abtriebsrad verbunden ist. Die technischen Effekte und Vorteile, die sich mit dem vorschlagsgemäßen Hilfsantrieb erreichen lassen, entsprechen denjenigen, die für die zuvor beschriebene Getriebeanordnung erörtert worden sind. Zusammenfassend sei darauf hingewiesen, dass große Übersetzungsverhältnisse auf kleinem Bauraum realisiert werden können, was insbesondere in Fahrzeugen eine wichtige Eigenschaft ist, da der dort zur Verfügung stehende Bauraum eng bemessen ist.

In einer weiteren Ausgestaltung kann die Abtriebswelle mit ihrem distalen Ende mit einer Bewegungsumwandlungseinheit zum Umwandeln der von der Abtriebswelle bereitgestellten Drehbewegung in eine Längsbewegung zusammenwirken. Die vom Antriebsmotor zur Verfügung gestellte Bewegung ist rotatorisch. Auch am Ausgang der Getriebeanordnung liegt an der Abtriebswelle eine rotatorische Bewegung an. In einigen Fällen wird aber eine lineare oder translatorische Bewegung benötigt, beispielsweise bei einer Sitzlängsverstellung, wo der Fahrzeugsitz in etwa parallel zur Längsachse des Fahrzeugs bewegt wird. Mit der Bewegungsumwandlungseinheit lässt sich die rotatorische Bewegung in eine Längsbewegung umwandeln, so dass der vorliegende Hilfsantrieb auch dann eingesetzt werden kann, wenn eine Längsbewegung realisiert werden soll.

Gemäß einer weiteren Ausgestaltung umfasst die Bewegungsumwandlungseinheit eine Gewindespindel und ein mit der Gewindespindel zusammenwirkendes Schneckengetriebe. Das Schneckengetriebe weist eine Schnecke und ein Schneckenrad auf. Die Schnecke kann dabei direkt mit der Abtriebswelle des Hilfsantriebs drehfest verbunden sein, wobei die Abtriebswelle starr ausgeführt werden kann. Die Verwendung von biegsamen Abtriebswellen, auch Flexwellen genannt, ist nicht notwendig, wodurch die Kosten und der Verschleiß reduziert werden können.

Das Schneckenrad kann ein Innengewinde aufweisen, mit welchem sie mit der Gewindespindel zusammenwirkt. Das Schneckengetriebe ist ortsfest im Fahrzeug angeordnet. Die Drehung der Schnecke wird mit einem bestimmten Übersetzungsverhältnis auf das Schneckenrad übertragen, wodurch die Gewindespindel axial bewegt wird. Diese axiale Bewegung kann zum Bewegen eines Bauteils des Fahrzeugs genutzt werden.

Eine weitergebildete Ausgestaltung ist dadurch gekennzeichnet, dass die Bewegungsumwandlungseinheit eine Zahnstange und ein am distalen Ende drehfest mit der Abtriebswelle verbundenes Zahnrad umfasst, welches in kämmendem Eingriff mit der Zahnstange steht. Die Drehung des Zahnrads wird in eine Längsbewegung der Zahnstange umgewandelt. Diese Längsbewegung kann zum Bewegen eines Bauteils des Fahrzeugs genutzt werden. Auch in dieser Ausgestaltung kann die Abtriebswelle starr ausgeführt sein.

Nach Maßgabe einer weiteren Ausgestaltung umfasst die Bewegungsumwandlungseinheit ein Riemen- oder Kettengetriebe mit einem am distalen Ende drehfest mit der Abtriebswelle verbundenen Antriebsrad zum Antreiben eines Riemens oder einer Kette. Der Riemen oder die Kette führen zwischen dem Antriebsrad und einem Umlenkrad eine lineare Bewegung aus, welche zum Bewegen eines Bauteils des Fahrzeugs genutzt werden. Im Gegensatz zu der bewegbaren Gewindespindel und der bewegbaren Zahnstange bleibt die axiale Erstreckung des Riemengetriebes oder des Kettengetriebes im Betrieb gleich, so dass der benötigte Bauraum in axialer Richtung geringer ist. Auch in dieser Ausgestaltung kann die Abtriebswelle starr ausgeführt sein.

Eine Ausgestaltung gibt vor, dass eine erste Abtriebswelle und eine zweite Abtriebswelle an ihren proximalen Enden mit dem Abtriebsrad drehfest verbunden sind, die erste Abtriebwelle mit ihrem distalen Ende mit einer ersten Bewegungsumwandlungseinheit und die zweite Abtriebswelle mit ihren distalen Ende mit einer zweiten Bewegungsumwandlungseinheit zum Umwandeln der von den Abtriebswellen bereitgestellten Drehbewegung in eine Längsbewegung zusammenwirken, und die erste und die zweite Bewegungsumwandlungseinheit mit einem Bauteil des Fahrzeugs verbunden sind, welches mit dem Hilfsantrieb linear bewegbar ist. In dieser Ausgestaltung sind der Antriebsmotor und die Getriebeanordnung zwischen den beiden Bewegungsumwandlungseinheiten angeordnet, wobei die beiden Bewegungsumwandlungseinheiten das Bauteil gemeinsam linear bewegen. Mit dieser Ausgestaltung können auch größere Bauteile präzise bewegt werden. Gemäß einer fortgebildeten Ausgestaltung ist das Bauteil ein Dachsegment eines Schiebedaches, eine Dachjalousie oder ein Fahrzeugsitz. Für diese Bauteile bietet sich die Anordnung der Getriebeanordnung und des Antriebsmotors zwischen den beiden Bewegungsumwandlungseinheiten besonders an. Bei einem Schiebedach und einer Dachjalousie können die beiden Bewegungsumwandlungseinheiten seitlich neben dem zu bewegenden Dachsegment angeordnet werden. Insbesondere bei Panoramadächern erstreckt sich das Dachsegment fast über die gesamte Breite des Fahrzeugdachs, so dass das Dachsegment eine Breite von deutlich über einem Meter aufweisen kann. Trotz dieser Breite kann das Dachsegment sehr präzise und verwindungsfrei bewegt werden.

Wie bereits erwähnt, kann die Getriebeanordnung so gestaltet werden, dass die Antriebswelle und die Abtriebswelle parallel zueinander verlaufen. Zudem ist es mit der Verwendung der Zwischenwelle möglich, die radiale Erstreckung des Hilfsantriebs gering zu halten. Diese Vorteile lassen sich bei Dachantrieben besonders umfänglich nutzen, da im Bereich des oberen Rahmens der Windschutzscheibe ein Bauraum zur Verfügung steht, der sich quer über das Fahrzeugdach erstreckt. Bei bekannten Schiebedächern muss ein sich relativ weit vom Fahrzeugdach in den Fahrzeuginnenraum erstreckender Kasten vorgesehen werden, in welchem der Antrieb und das Getriebe des Dachantriebs untergebracht sind. Mit der vorschlagsgemäßen Getriebeanordnung kann der Dachantrieb mit einer größeren und weniger störenden axialen Erstreckung und einer geringeren radialen Erstreckung ausgebildet werden, wodurch das Volumen des Kastens zum Unterbringen des Hilfsantriebs deutlich verringert werden kann. Das Design des Innenraums wird weniger stark beeinträchtigt. Aufgrund des geringen Bauraums kann das Dachsegment relativ weit bis an den Rahmen der Windschutzscheibe heran geführt werden, wodurch sich die Fläche des Dachsegments vergrößern lässt. Eine Ausführung der Erfindung betrifft ein Fahrzeug, insbesondere Kraftfahrzeug, mit einem Hilfsantrieb nach einem der zuvor erörterten Ausgestaltungen. Die technischen Effekte und Vorteile, die sich mit dem vorschlagsgemäßen Fahrzeug erreichen lassen, entsprechen denjenigen, die für den vorschlagsgemäßen Hilfsantrieb erörtert worden sind. Zusammenfassend sei darauf hingewiesen, dass große Übersetzungsverhältnisse auf kleinem Bauraum realisiert werden können, was insbesondere in Fahrzeugen eine wichtige Eigenschaft ist, da der dort zur Verfügung stehende Bauraum eng bemessen ist.

Eine weitere Ausbildung der Erfindung betrifft eine Motor-Getriebe-Verbindungsanordnung, insbesondere zur Verwendung in einem Fahrzeug.

Motor-Getriebe-Verbindungsanordnungen fassen einen Antriebsmotor, beispielsweise einen Elektromotor, und ein Getriebe, insbesondere die zuvor genannte Getriebeanordnung, zu einer Baueinheit zusammen. Die sich hieraus ergebende Baueinheit kann von einem Hersteller vormontiert werden, wodurch der Einbau in eine Vorrichtung, in welche die Baueinheit eingesetzt werden soll, vereinfacht werden kann. Eine besondere Ausgestaltung derartiger Vorrichtungen, wo Motor-Getriebe-Verbindungsanordnungen häufig verwendet werden, stellen Fahrzeuge dar. Im Zuge der Erhöhung des Komforts in Fahrzeugen werden immer mehr Bewegungen zwischen zwei Fahrzeugteilen, die in der Vergangenheit manuell von den Fahrzeuginsassen bewerkstelligt worden, von Motoren, insbesondere von Elektromotoren, ausgeführt. Wurden in älteren Fahrzeugen die Fensterscheiben und Schiebedächer durch Drehen einer Kurbel manuell geöffnet und geschlossen, werden hierzu heutzutage nahezu ausnahmslos elektromotorische Fensterheber eingesetzt. Mehr und mehr setzen sich elektrisch verstellbare Heckklappen durch, mit welchen die Heckklappen per Knopfdruck automatisch öffnen und schließen lassen. Weiterhin nimmt die Anzahl von Assistenz- und Sicherheitssystemen immer weiter zu, so dass der ohnehin schon begrenzte Bauraum im Fahrzeug immer knapper wird. Die Problematik des begrenzten Bauraums wird mit der fortschreitenden Elektrifizierung der Fahrzeuge weiter zunehmen, da die Akkus zum Speichern von elektrischer Energie eine vergleichsweise geringe Energiedichte aufweisen und daher viel Platz benötigen.

Bei der Verwendung von Elektromotoren umfasst die Motor-Getriebe-Verbindungsanordnung einen Motortopf zum Aufnehmen eines Elektromotors, einen Bürstenhalter zum Halten von Bürsten des Elektromotors, und ein Getriebegehäuse zum Aufnehmen eines Getriebes. Diese drei Komponenten müssen bei der Montage relativ zueinander ausgerichtet und miteinander verbunden werden. Üblicherweise wird der Bürstenhalter innerhalb des Motortopfes zentriert und das Getriebegehäuse über eine flanschartige Verbindung mit dem Motortopf verbunden. Die Verbindung des Getriebegehäuses mit dem Motortopf erfolgt über Schrauben, die durch Öffnungen, welche auf radial nach außen überstehenden Abschnitten des Motortopfes und des Getriebegehäuses angeordnet sind, durchgeführt werden. Aufgrund dieser nach außen überstehenden Abschnitte muss ein gewisser Bauraum freigehalten werden, welcher insbesondere in Fahrzeugen aus den eingangs genannten Gründen knapp ist.

Bei einer nicht ausreichend genauen Ausrichtung des Bürstenhalters und des Getriebegehäuses in Bezug auf den Motortopf tritt eine erhöhte Geräuschentwicklung im Betrieb einer Antriebsvorrichtung auf, welche eine derartige Motor-Getriebe-Verbindungsanordnung verwendet.

Aufgabe einer Ausbildung der vorliegenden Erfindung ist es daher, eine Motor-Getriebe-Verbindungsanordnung zu schaffen, mit welcher Bauraum eingespart werden kann und welche einfach herzustellen und zu montieren ist. Zudem soll die Motor-Getriebe-Verbindungsanordnung eine möglichst genaue Ausrichtung des Motortopfs, des Bürstenhalters und des Getriebegehäuses zueinander ermöglichen.

Eine Ausbildung der Erfindung betrifft eine Motor-Getriebe-Verbindungsanordnung, insbesondere zur Verwendung in einem Fahrzeug, umfassend einen Motortopf zum Aufnehmen eines Elektromotors, einen Bürstenhalter zum Halten von Bürsten des Elektromotors, und ein Getriebegehäuse zum Aufnehmen eines Getriebes, insbesondere der zuvor beschriebenen Getriebeanordnung, wobei der Motortopf, der Bürstenhalter und das Getriebegehäuse zum Verbinden ineinander einsteckbar sind. Der Motortopf weist eine Anzahl von Zentrierflächen auf, mit welchen der Motortopf sowohl mit dem Bürstenhalter als auch mit dem Getriebegehäuse in Kontakt tritt, wenn der Motortopf, der Bürstenhalter und das Getriebegehäuse ineinander eingesteckt sind, wodurch der Bürstenhalter und das Getriebegehäuse konzentrisch zum Motortopf ausgerichtet werden.

Die Anzahl der Zentrierflächen kann prinzipiell frei gewählt werden. Allerdings ist zu beachten, dass in jede der drei Raumachsen aufgrund von Fertigungstoleranzen nur jeweils ein Paar von Kontaktflächen und Gegenflächen pro Raumachse wirksam sein kann. Zudem ist eine statische Überbestimmung zu vermeiden, so dass zwischen zwei Kontaktflächenpaaren, die an sich miteinander in Kontakt treten könnten, absichtlich ein Spalt vorgesehen wird. Hierdurch können Formänderungen infolge von Temperaturschwankungen ausgeglichen werden, ohne dass Spannungen in die betreffenden Bauteile eingeleitet werden.

Die Zentrierung des Bürstenhalters und des Getriebegehäuses in Bezug auf den Motortopf wird ausschließlich über die Zentrierflächen vorgenommen, die keine Begrenzung der Bewegbarkeit entlang der Längsachse der Motor-Getriebe-Verbindungsanordnung bewirken, sondern die Bewegbarkeit des Bürstenhalters und des Getriebegehäuses senkrecht zur Längsachse begrenzen. Dadurch, dass die Zentrierung ausschließlich über die Zentrierflächen vorgenommen wird, wird ein Aufsummieren der Fertigungstoleranzen vermieden. Bei der eingangs beschriebenen aus dem Stand der Technik bekannten Motor-Getriebe-Verbindungsanordnung werden der Bürstenhalter und das Getriebegehäuse jeweils separat gegenüber dem Motortopf zentriert, so dass sich hier die Toleranzen addieren.

Aufgrund der vorschlagsgemäßen Zentrierflächen können der Bürstenhalter und das Getriebegehäuse auf einfache Weise sehr genau konzentrisch zum Motortopf angeordnet werden. Geräuschentwicklungen, welche durch eine unzureichende konzentrische Anordnung des Motortopfs, des Bürstenhalters und des Getriebegehäuses zueinander hervorgerufen werden, werden hierdurch vermieden, so dass die Antriebsvorrichtung, welche Gebrauch von der vorschlagsgemäßen Motor-Getriebe-Verbindungsanordnung macht, sehr leise betrieben werden kann.

Der Motortopf dient in dieser Ausbildung als eine Aufnahme, in welche der Bürstenhalter und das Getriebegehäuse eingesteckt werden. Die Zentrierflächen verlaufen innerhalb des Motortopfes, so dass der Bürstenhalter und das Getriebegehäuse im eingesteckten Zustand mehr oder weniger weit in den Motortopf hineinragen, wobei der Bürstenhalter im eingesteckten Zustand auch komplett vom Motortopf umgeben sein kann. Hierdurch kann die Motor-Getriebe-Verbindungsanordnung kürzer gebaut werden, wodurch weiterer Bauraum in axialer Richtung eingespart werden kann. Aufgrund der Möglichkeit, dem Motortopf kürzer zu bauen, muss er auch nicht so weit tiefgezogen werden, was aus fertigungstechnischer Sicht eine Vereinfachung darstellt.

Die Modifikationen, die am Bürstenhalter gegenüber bekannten Varianten vorgenommen werden müssen, sind signifikant klein. Der Bürstenhalter muss nur so angepasst werden, dass die Kontaktflächen des Motortopfes tatsächlich auch einen Kontakt mit dem Bürstenhalter herstellen können. Der Aufwand zur Herstellung des im Spritzgussverfahren benötigten Werkzeugs unterscheidet sich nicht zu demjenigen, welches bislang verwendet wird. Der Unterschied liegt lediglich in der Kontur der Kavität. Selbiges gilt auch für das Getriebegehäuse. Der prinzipielle Aufbau des Bürstenhalters und des Getriebegehäuses muss nicht geändert werden. Die Bürstenhalter und das Getriebegehäuse können im Spritzgussverfahren hergestellt werden, so dass sich große Stückzahlen zu relativ geringen Kosten herstellen lassen.

Eine weitere Ausbildung ist dadurch gekennzeichnet, dass der Motortopf erste Kontaktflächen, mit welchen der Motortopf mit dem Bürstenhalter in Kontakt tritt, und/oder zweite Kontaktflächen aufweist, mit welchen der Motortopf mit dem Getriebegehäuse in Kontakt tritt, wenn der Motortopf, der Bürstenhalter und das Getriebegehäuse ineinander eingesteckt sind. Die ersten und die zweiten Kontaktflächen können dabei so ausgestaltet sein, dass sie bezogen auf die Längsachse der Motor-Getriebe-Verbindungsanordnung als Anschlagsflächen wirken und die Bewegbarkeit der Bauteile relativ zueinander entlang der Längsachse begrenzen. Die ersten und/oder zweiten Kontaktflächen haben keine konzentrisch ausrichtende Wirkung des Bürstenhalters und des Getriebegehäuses in Bezug auf den Motortopf. Es bietet sich an, erste und zweite Gegenflächen im Getriebegehäuse vorzusehen, mit welchen die ersten und/oder zweiten Kontaktflächen in Kontakt treten, wenn der Motortopf, der Bürstenhalter und das Getriebegehäuse ineinander eingesteckt sind.

Nach Maßgabe einer weiteren Ausbildung weist der Bürstenhalter dritte Kontaktflächen auf, mit welchen der Bürstenhalter mit dem Getriebegehäuse in Kontakt tritt, wenn der Motortopf, der Bürstenhalter und das Getriebegehäuse ineinander eingesteckt sind. Es bietet sich dabei an, die dritten Kontaktflächen mit Quetschrippen zu versehen, welche zum Spielausgleich der Motor-Getriebe-Verbindungsanordnung entlang der Längsachse dienen. Darüber hinaus bietet es sich an, dritte Gegenflächen im Getriebegehäuse vorzusehen, mit welchen die dritten Kontaktflächen in Kontakt treten, wenn der Motortopf, der Bürstenhalter und das Getriebegehäuse ineinander eingesteckt sind.

In dieser Ausbildung wird das Getriebegehäuse gleichzeitig dazu verwendet, die Beweglichkeit des Bürstenhalters entlang der Längsachse der Motor-Getriebe-Verbindungsanordnung zu beschränken, so dass keine weiteren Maßnahmen hierzu getroffen werden müssen. Die Gestaltung und die Montage werden hierdurch vereinfacht.

Mit den vorschlagsgemäßen Zentrierflächen werden der Bürstenhalter und das Getriebegehäuse in Bezug auf den Motortopf eindeutig zentriert und konzentrisch zum Motortopf angeordnet, so dass keine weiteren Maßnahmen, beispielsweise die Verwendung von Positionierungsstiften oder dergleichen mehr notwendig ist. Weiterhin ist es insbesondere dann, wenn die Motor-Getriebe-Verbindungsanordnung die dritten Kontaktflächen aufweist, nicht mehr notwendig, gesonderte Befestigungsmaßnahmen zum Befestigen des Bürstenhalters innerhalb der Motor-Getriebe-Verbindungsanordnung vorzunehmen. Somit genügt es, den Motortopf und das Getriebegehäuse miteinander zu verbinden, da der Bürstenhalter bezogen auf die Längsachse einerseits am Motortopf und andererseits am Getriebegehäuse anliegt.

In einer weitergebildeten Ausbildung können der Motortopf und/oder das Getriebegehäuse Crimpabschnitte zum Verbinden des Getriebegehäuses mit dem Motortopfes aufweisen.

Wie eingangs erwähnt, wird dies bei bekannten Motor-Getriebe-Verbindungsanordnung mittels einer Verschraubung unter Verwendung einer flanschartigen Verbindung umgesetzt. Die vorschlagsgemäße Motor-Getriebe-Verbindungsanordnung ermöglicht die Verwendung von Crimpabschnitten, die zum Verbinden des Motortopfes und des Getriebegehäuses mittels eines geeigneten Werkzeugs verformt werden. Hierdurch ist die flanschartige Verbindung nicht mehr notwendig, weshalb die Erstreckung der Motor-Getriebe-Verbindungsanordnung in radialer Richtung verringert und Bauraum eingespart werden kann.

In einer alternativen Ausbildung weist die Motor-Getriebe-Verbindungsanordnung Zentrierflächen auf, mit welchen das Getriebegehäuse sowohl mit dem Bürstenhalter als auch mit dem Motortopf in Kontakt tritt, wenn der Motortopf, der Bürstenhalter und das Getriebegehäuse ineinander eingesteckt sind, wodurch der Bürstenhalter und der Motortopf konzentrisch zum Getriebegehäuse ausgerichtet werden. Die oben genannten Vorteile gelten auch für diese alternative Ausführungsform.

Eine Umsetzung der Erfindung betrifft ein Schiebedach in einem Fahrzeug, umfassend eine Motor-Getriebe-Verbindungsanordnung nach einem der vorherigen Ausführungsformen. Zudem betrifft eine Ausführung der Erfindung die Verwendung einer Motor-Getriebe-Verbindungsanordnung nach einem der vorherigen Ausführungsformen für Hilfsantriebe in einem Fahrzeug, insbesondere in einem Kraftfahrzeug. Unter Hilfsantrieben sind Antriebe zu verstehen, mit denen ein Fahrzeugteil relativ zu einem anderen Fahrzeugteil bewegt wird, beispielsweise bei Fensterhebern, Heckklappen und Sitzen. Hilfsantriebe sind aber nicht geeignet, das Fahrzeug selbst zu bewegen.

Eine Ausgestaltung der Erfindung betrifft ein Fahrzeug, insbesondere Kraftfahrzeug, umfassend Motor-Getriebe-Verbindungsanordnung nach einem der vorherigen Ausführungsformen. Die Vorteile und technischen Effekte, die sich mit einem derartigen Schiebedach, der Verwendung der Motor-Getriebe-Verbindungsanordnung und einem derartigen Fahrzeug realisieren lassen, entsprechen denjenigen, welche für die verschiedenen Ausführungsformen der Motor-Getriebe-Verbindungsanordnung beschrieben worden sind. Dadurch, dass die Zentrierung ausschließlich über die Zentrierflächen vorgenommen wird, wird ein Aufsummieren der Toleranzen vermieden. Weiterhin ist ein Vercrimpen zum Befestigen des Getriebegehäuses am Motortopf möglich, wohingegen im Stand der Technik eine Verschraubung notwendig ist. Hierdurch wird die Logistik vereinfacht, da die Vercrimpabschnitte direkt am Motortopf und/oder am Getriebegehäuse angeformt sind und daher keine separaten Verbindungselemente vorgehalten werden müssen. Für den Antrieb eines Schiebedachs steht insbesondere dann sehr wenig Bauraum zur Verfügung, wenn das Schiebedach als Panoramadach ausgestaltet ist. Insbesondere in diesem Fall kommt der reduzierte Bauraum der vorschlagsgemäßen Motor-Getriebe-Verbindungsanordnung besonders stark zur Geltung. Weiterhin lässt sich aufgrund der Möglichkeit, den Bürstenhalter und das Getriebegehäuse sehr präzise konzentrisch zum Motortopf anzuordnen, ein sehr geräuscharmer Betrieb der Antriebsvorrichtung realisieren, welche die vorschlagsgemäße Motor-Getriebe-Verbindungsanordnung verwendet.

Beispielhafte Ausführungsformen der Erfindung werden im Folgenden unter Bezugnahme auf die beigefügten Zeichnungen näher erläutert. Es zeigen
- Figur 1a): ein Ausführungsbeispiel eines erfindungsgemäßen Hilfsantriebs im montierten Zustand,
- Figur 1b): den in Figur 1a) gezeigten Hilfsantrieb mit zwei angeschlossenen Abtriebswellen,
- Figur 2: den in Figur 1a) gezeigten Hilfsantrieb ohne Getriebegehäuse, jeweils anhand einer perspektivischen Darstellung,
- Figur 3: eine Schnittdarstellung des Hilfsantriebs entlang der Drehachse des Abtriebsrads,
- Figur 4: den in Figur 1a) dargestellten Hilfsantrieb anhand einer Seitenansicht,
- Figur 5: den Hilfsantrieb anhand einer Schnittdarstellung entlang der in Figur 4 definierten Schnittebene A-A,
- Figur 6: eine prinzpielle Draufsicht auf eine erste Ausführungsform eines Schiebedachs mit einem erfindungsgemäßen Hilfsantrieb,
- Figur 7: eine prinzpielle Draufsicht auf eine zweite Ausführungsform eines Schiebedachs mit einem erfindungsgemäßen Hilfsantrieb, und
- Figur 8: eine perspektivische Darstellung eines Fahrzeugs, welches ein Schiebedach nach dem ersten Ausführungsbeispiel aufweist.
- Figur 9a): eine erste perspektivische Explosionsdarstellung eines Ausführungsbeispiels einer vorschlagsgemäßen Motor-Getriebe-Verbindungsanordnung,
- Figur 9b): eine zweite perspektivische Explosionsdarstellung der in Figur 9a) gezeigten Motor-Getriebe-Verbindungsanordnung,
- Figur 10a): eine Seitenansicht der in Figur 9a) dargestellten Motor-Getriebe-Verbindungsanordnung im zusammengebauten Zustand,
- Figur 10b): eine Schnittdarstellung entlang der in Figur 10a) definierten Schnittebene A-A, und
- Figur 10c): eine Schnittdarstellung entlang der in Figur 10a) definierten Schnittebene B-B.

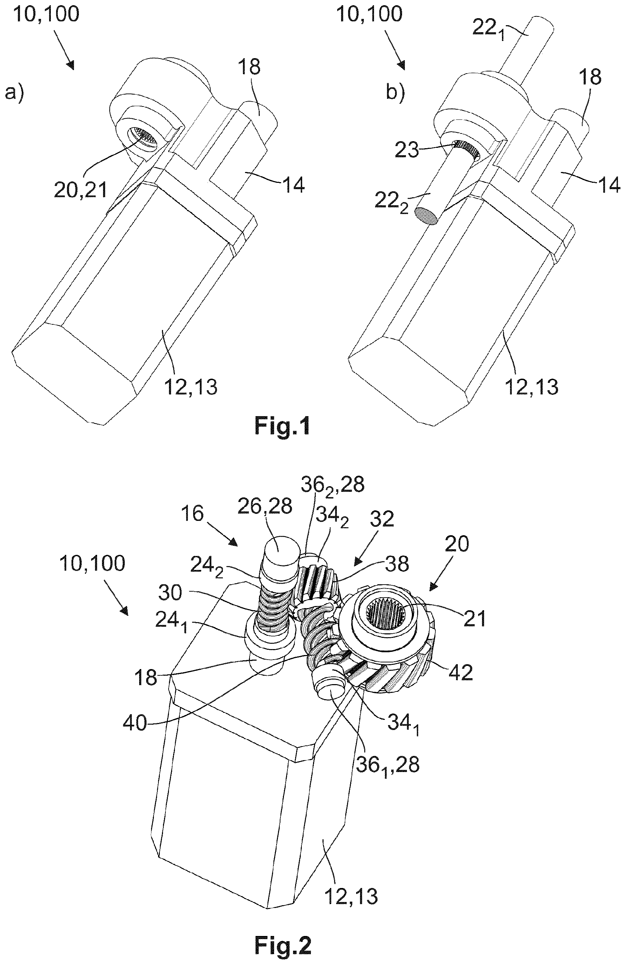

In Figur 1a) ist ein Ausführungsbeispiel eines erfindungsgemäßen Hilfsantriebs 10 im montierten Zustand anhand einer perspektivischen Darstellung gezeigt. Der Hilfsantrieb 10 umfasst einen Antriebsmotor 12, welcher im dargestellten Ausführungsbeispiel als ein Elektromotor ausgeführt ist und in einem Motortopf 13 angeordnet ist. Weiterhin umfasst der Hilfsantrieb 10 ein Getriebegehäuse 14, in welchem eine Getriebeanordnung 16 untergebracht ist, die später näher erläutert wird. Der Antriebsmotor 12 ist mit einer Antriebswelle 18 verbunden, welche das Getriebegehäuse 14 durchläuft und deren freies Ende in Figur 1 sichtbar ist.

Die Getriebeanordnung 16 umfasst ein Abtriebsrad 20, welches eine Innenverzahnung 21 aufweist, die in Figur 1a) sichtbar ist.

In Figur 1b) ist erkennbar, dass eine erste Abtriebswelle 22 und eine zweite Abtriebswelle 22₂ unter Verwendung der Innenverzahnung 21 drehfest mit dem Abtriebsrad 20 verbunden sind, wozu die Abtriebswellen 22 eine zur Innenverzahnung 21 korrespondierende Außenverzahnung 23 aufweisen. Die mit dem Antriebsmotor 12 verbundene Antriebswelle 18 verläuft parallel und etwas versetzt zu den Abtriebswellen 22₁, 22₂.

In Figur 2 ist der Hilfsantrieb 10 ohne das Getriebegehäuse 14 gezeigt, so dass nun die Getriebeanordnung 16 sichtbar wird. Man erkennt, dass die mit dem Antriebsmotor 12 verbundene Antriebswelle 18 mit einem ersten Antriebswellen-Radiallager 24₁ und einem zweiten Antriebswellen-Radiallager 24₂ radial im Getriebegehäuse 14 gelagert ist, wobei die beiden Antriebswellen-Radiallager 24₁, 24₂ als Gleitlager ausgebildet sind. Weiterhin ist die Antriebswelle 18 mit einem Antriebswellen-Axiallager 26 axial gelagert. Das Antriebswellen-Axiallager 26 umfasst Vorspannmittel 28, die sich optisch nicht vom Antriebswellen-Axiallager 26 unterscheiden lassen. Die Vorspannmittel 28 weisen eine gewisse Elastizität auf und spannen die Antriebswelle 18 axial vor. Innerhalb des Antriebsmotors 12 und daher nicht sichtbar ist ein weiteres Antriebswellen-Axiallager vorgesehen, welches ebenfalls ein Vorspannmittel 28 aufweist.

Die Antriebswelle 18 umfasst einen Antriebswellen-Verzahnungsabschnitt 30, der zwischen den beiden Antriebswellen-Radiallagern 24₁ 24₂ angeordnet und schrauben- oder schneckenförmig ausgebildet ist.

Weiterhin umfasst die Getriebeanordnung 16 eine Zwischenwelle 32, welche mit einem ersten Zwischenwellen-Radiallager 34₁ und einem zweiten Zwischenwellen-Radiallager 34₂ im Getriebegehäuse 14 radial gelagert ist. Die Zwischenwellen-Radiallager 34₁, 34₂ sind als Gleitlager ausgestaltet. An den beiden Enden ist die Zwischenwelle 32 mit zwei Zwischenwellen-Axiallagern 36₁, 36₂ axial gelagert, die ebenfalls die optisch nicht von den Zwischenwellen-Axiallagern 36₁, 36₂ unterscheidbaren Vorspannmittel 28 zum axialen Vorspannen der Zwischenwelle 32 aufweisen.

Zwischen den beiden Zwischenwellen-Radiallagern 34₁, 34₂ weist die Zwischenwelle 32 einen ersten Zwischenwellen-Verzahnungsabschnitt 38, der mit dem Antriebswellen-Verzahnungsabschnitt 30 in kämmendem Eingriff steht, und einen zweiten Zwischenwellen-Verzahnungsabschnitt 40 auf. Der zweite Zwischenwellen-Verzahnungsabschnitt 40 ist schnecken- oder schraubenförmig ausgebildet und kämmt mit einem auf dem Abtriebsrad 20 angeordneten Abtriebsrad-Verzahnungsabschnitt 42.

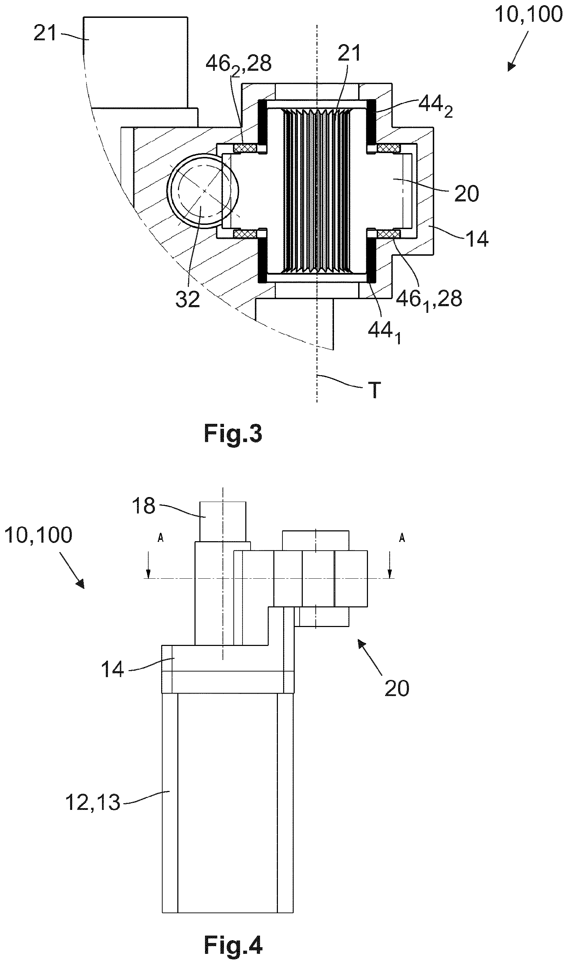

Figur 3 zeigt das Abtriebsrad 20 anhand einer Schnittdarstellung durch die Drehachse T des Abtriebsrads 20. Man erkennt, dass das Abtriebsrad 20 mit einem ersten Abtriebsrad-Radiallager 44₁ und einem zweiten Abtriebsrad -Radiallager 44₂ radial im Getriebegehäuse 14 gelagert ist. Die Abtriebsrad-Radiallager 44₁, 44₂ sind als Gleitlager ausgestaltet.

Weiterhin ist in Figur 3 erkennbar, dass das Abtriebsrad 20 mit zwei Abtriebsrad-Axiallagern 46₁, 46₂ axial im Getriebegehäuse 14 gelagert ist. Auch die Abtriebsrad-Axiallager 46₁, 46₂ weisen die optisch nicht von den Abtriebsrad-Axiallager 46₁, 46₂ unterscheidbaren Vorspannmittel 28 zum axialen Vorspannen des Abtriebsrads 20 auf.

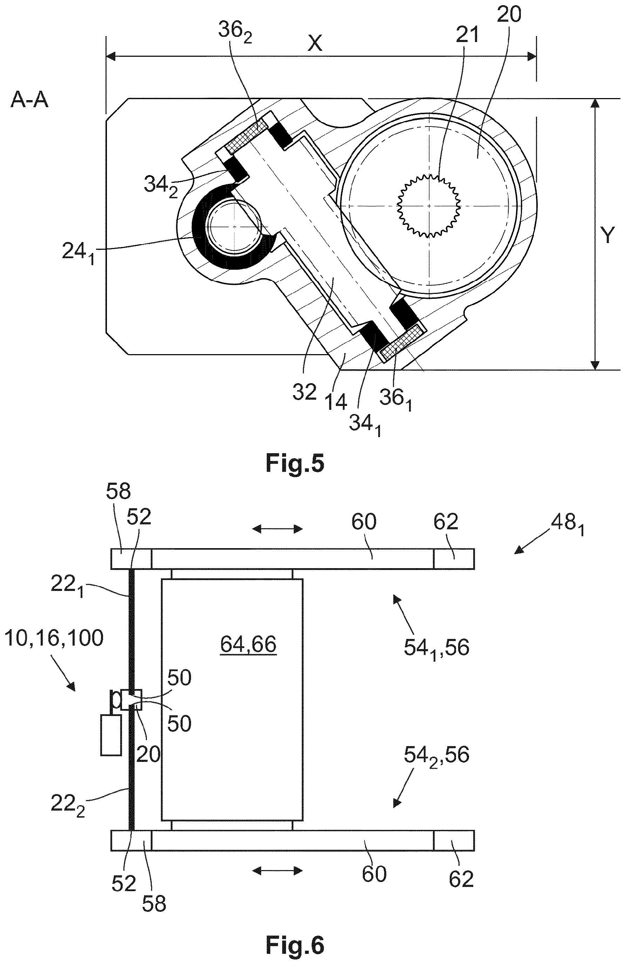

Figur 4 zeigt eine Seitenansicht des Hilfsantriebs 10 und Figur 5 eine Schnittdarstellung des Hilfsantriebs 10 entlang der in Figur 4 definierten Schnittebene A-A. In Figur 5 erkennt man gut die Zwischenwellen-Radiallager 34₁, 34₂ und die Zwischenwellen-Axiallager 36₁, 36₂. Weiterhin erkennt man das erste Antriebswellen-Radiallager 24₁ der Antriebswelle 18. In Figur 5 sind die äußeren Abmessungen X und Y des Hilfsantriebs 10 dargestellt, die aufgrund der erfindungsgemäßen Gestaltung der Getriebeanordnung 16 gering gehalten werden können.

In Figur 6 ist eine prinzpielle Draufsicht auf eine erste Ausführungsform eines Schiebedachs 48₁ mit dem erfindungsgemäßen Hilfsantrieb 10 gezeigt. Der Hilfsantrieb 10 umfasst die erste und die zweite Abtriebswelle 22₁, 22₂, welche starr ausgeführt sind und die mit ihrem proximalen Ende 50 drehfest mit dem Abtriebsrad 20 verbunden sind. An ihren distalen Enden 52 wirken die Abtriebswellen 22₁, 22₂ mit einer ersten Bewegungsumwandlungseinheit 54₁ und einer zweiten Bewegungsumwandlungseinheit 54₂ zusammen, mit denen die rotatorische Bewegung des Abtriebsrads 20 in eine translatorische Bewegung umgewandelt werden kann. Im in Figur 6 dargestellten Ausführungsbeispiel sind die Bewegungsumwandlungseinheiten 54₁, 54₂ als ein Riemen- oder Kettengetriebe 56 ausgeführt. Die Abtriebswellen 22₁, 22₂ sind an ihren distalen Enden 52 jeweils drehfest mit einem Antriebsrad 58 verbunden, welches einen Riemen bzw. eine Kette 60 antreibt. Der Riemen bzw. die Kette 60 verläuft zwischen dem Antriebsrad 58 und einem Umlenkrad 62 und führt dabei eine Längsbewegung aus.

Zwischen der ersten und der zweiten Bewegungsumwandlungseinheit 54₁, 54₂ ist ein Bauteil 64 angeordnet, welches im dargestellten Ausführungsbeispiel als ein Dachsegment 66 des Schiebedachs 48 ausgeführt ist. Das Dachsegment 66 ist mit dem Riemen oder der Kette 60 verbunden, so dass die Längsbewegung des Riemens oder der Kette 60 auf das Dachsegment 66 übertragen wird. Folglich kann das Dachsegment 66 entlang der mit den Pfeilen gekennzeichneten Richtung bewegt werden.

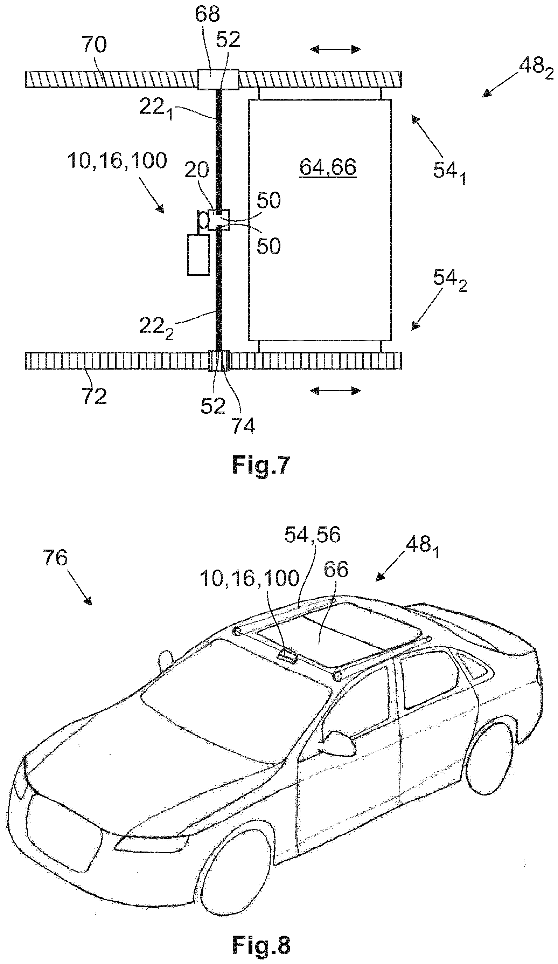

In Figur 7 ist eine prinzpielle Draufsicht auf eine zweite Ausführungsform des Schiebedachs 48₂ mit dem erfindungsgemäßen Hilfsantrieb 10 gezeigt, deren wesentlicher Aufbau dem in Figur 6 dargestellten Ausführungsbeispiel weitgehend gleicht. Allerdings sind die erste und die zweite Bewegungsumwandlungseinheit 54₁, 54₂ anders ausgestaltet, wobei zwei Ausführungsformen der Bewegungsumwandlungseinheit 54₁, 54₂ in Figur 7 zusammengefasst sind.

Die erste Bewegungsumwandlungseinheit 54₁ umfasst ein Schneckengetriebe 68, welches ortsfest im Fahrzeug angeordnet ist. Das Schneckengetriebe 68 weist eine nicht separat dargestellte Schnecke, welche drehfest mit der ersten Abtriebswelle 22 verbunden ist. Die Schnecke steht im kämmenden Eingriff mit einem ebenfalls nicht dargestellten Schneckenrad, welches ein Innengewinde aufweist, das mit einer Gewindespindel 70 zusammenwirkt. Durch Drehen der Schnecke dreht sich auch das Schneckenrad, wodurch die Gewindespindel 70 eine Längsbewegung entlang der mit dem Pfeil gekennzeichneten Richtung ausführt.

Die zweite Bewegungsumwandlungseinrichtung 54₂ umfasst eine Zahnstange 72, welche mit einem am distalen Ende 52 der zweiten Antriebswelle 18 drehfest angeordneten Zahnrad 74 kämmt. Durch Drehen des Zahnrads 74 wird die Zahnstange 72 entlang der mit dem Pfeil gekennzeichneten Richtung bewegt. In beiden Fällen ist das Dachsegment 66 mit der Gewindespindel 70 bzw. mit der Zahnstange 72 verbunden, so dass die Bewegung der Gewindespindel 70 bzw. der Zahnstange 72 auf das Dachsegment 66 übertragen wird. Aufgrund dieser Bewegung kann das Schiebedach 48 geöffnet oder geschlossen werden.

In Figur 8 ist ein Fahrzeug 76 anhand einer prinzipiellen und perspektivischen Darstellung gezeigt, welches ein Schiebedach 48₁ nach dem ersten Ausführungsbeispiel aufweist. Man erkennt, dass der Antriebsmotor 12 und die Getriebeanordnung 16 in etwa in der Fahrzeugmitte angeordnet sind, während der Riemen- oder Kettengetriebe 56 seitlich außerhalb des Dachsegments 66 positioniert sind.

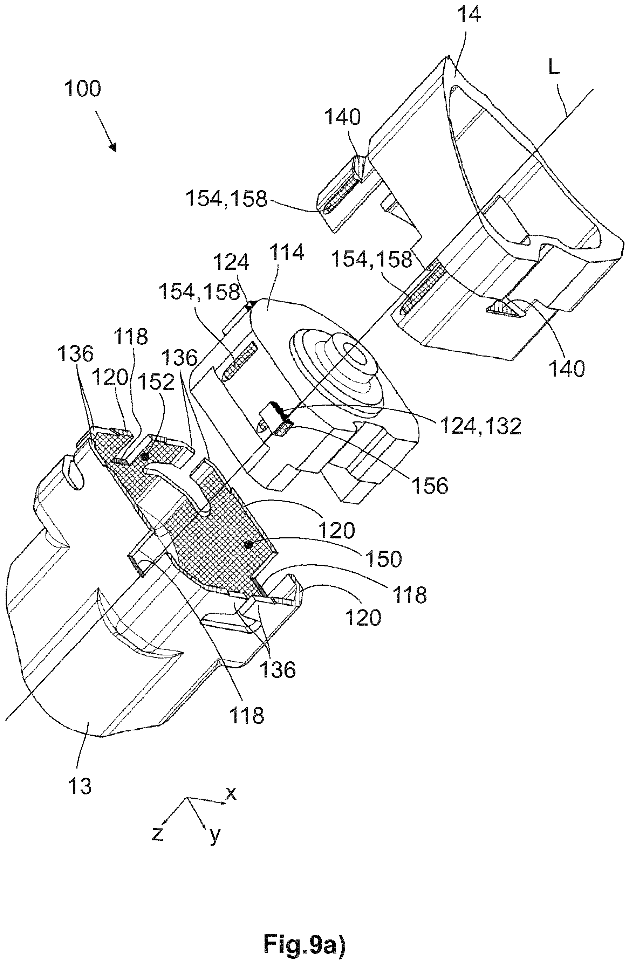

In den Figuren 9a) bis 10c) ist ein Ausführungsbeispiel einer erfindungsgemäßen Motor-Getriebe-Verbindungsanordnung 100 dargestellt. Die Motor-Getriebe-Verbindungsanordnung 100 umfasst den Motortopf 13 (siehe beispielsweise Figuren 1 und 2) zum Aufnehmen eines nicht dargestellten Elektromotors, einen Bürstenhalter 114, mit welchem nicht dargestellte Bürsten für den Elektromotor gehalten werden, und das Getriebegehäuse 14 zum Aufnehmen eines ebenfalls nicht dargestellten Getriebes. Das Getriebegehäuse 14 kann aber auch zur Aufnahme der beispielsweise in Figur 2 dargestellten Getriebeanordnung 16 dienen. Der Motortopf 13 umfasst erste Kontaktflächen 118, mit denen der Motortopf 13 mit dem Bürstenhalter 114 in Kontakt tritt, wenn der Bürstenhalter 114 in den Motortopf 13 eingesteckt ist. Weiterhin weist der Motortopf 13 zweite Kontaktflächen 120 auf, mit denen der Motortopf 13 mit dem Getriebegehäuse 14 in Kontakt tritt, wenn das Getriebegehäuse 14 in den Motortopf 13 eingesteckt ist.

Zudem weist der Bürstenhalter 114 dritte Kontaktflächen 124 auf, mit denen der Bürstenhalter 114 mit dem Getriebegehäuse 14 in Kontakt tritt, wenn der Bürstenhalter 114 und das Getriebegehäuse 14 in den Motortopf 13 eingesteckt sind. Auf den dritten Kontaktflächen 124 sind Quetschrippen 132 angeordnet, auf die später noch genauer eingegangen wird.

Darüber hinaus umfasst der Motortopf 13 Zentrierflächen 150, welche in x-Richtung wirken, und Zentrierflächen 152 auf, die in y-Richtung wirken, mit denen der Motortopf 13 sowohl mit dem Bürstenhalter 114 als auch mit dem Getriebegehäuse 14 in Kontakt tritt, wenn der Bürstenhalter 114 und das Getriebegehäuse 14 in den Motortopf 13 eingesteckt sind.

Der Bürstenhalter 114 und das Getriebegehäuse 14 weisen erste Gegenflächen 126, zweite Gegenflächen 128 und dritte Gegenflächen 130 auf, mit denen sie mit der oder den ersten, zweiten bzw. dritten Kontaktflächen 118, 120, 124 in Kontakt treten, wenn der Bürstenhalter 114 und das Getriebegehäuse 14 in den Motortopf 13 eingesteckt sind.

Zudem weisen der Bürstenhalter 114 und das Getriebegehäuse 14 Zentriergegenflächen 154, die bezogen auf das in den Figuren angegebene Koordinatensystem in x-Richtung wirken, und Zentriergegenflächen 156 auf, die in y-Richtung wirken. Folglich verlaufen die Zentriergegenflächen 154 parallel zu einer Längsachse L und liegen in der y-z-Ebene und bewirken bei Kontakt mit den Zentrierflächen 150 eine Zentrierung in die x-Richtung. Entsprechend verlaufen die Zentrierflächen 156 parallel zur Längsachse L und liegen in der x-z- Ebene. Sie bewirken bei Kontakt mit den Zentrierflächen 152 eine Zentrierung in y-Richtung bezogen auf das Koordinatensystem.

Im dargestellten Ausführungsbeispiel sind die Zentriergegenflächen 154 in x-Richtung als Erhöhungen 158 ausgestaltet oder auf Erhöhungen 158 angeordnet. Die Zentriergegenflächen 154 treten mit den Zentrierflächen 150 und die Zentriergegenflächen 156 mit den Zentrierflächen 152 in Kontakt, wenn der Bürstenhalter 114 und das Getriebegehäuse 14 in den Motortopf 13 eingesteckt sind.

Bei Betrachtung der Figuren 9a) und 9b) erkennt man, dass die ersten, zweiten und dritten Kontaktflächen 118, 120, 124 in einer senkrecht zur Längsachse L der Motor-Getriebe-Verbindungsanordnung 100 verlaufenden Ebene liegen. Bezogen auf das Koordinatensystem verlaufen sie in einer x-y-Ebene, wobei die Längsachse L parallel zur z-Achse des Koordinatensystems verläuft.

Auch die ersten, zweiten und dritten Gegenflächen 126, 128, 130 liegen in der senkrecht zur Längsachse L verlaufenden x-y-Ebene. Folglich wirken die ersten, zweiten und dritten Kontaktflächen 118, 120, 124 als Anschläge, welche die Bewegbarkeit des Motortopfes 13, des Bürstenhalters 114 und des Getriebegehäuses 14 relativ zueinander entlang der Längsachse L bzw. in z-Richtung begrenzen.

Darüber hinaus weist der Motortopf 13 insgesamt sechs Crimpabschnitte 136 auf, mit denen das Getriebegehäuse 14 am Motortopf 13 befestigt werden kann und wodurch der Bürstenhalter 114 zwischen dem Motortopf 13 und dem Getriebegehäuse 14 verspannt wird.

Zur Montage der Motor-Getriebe-Verbindungsanordnung 100 wird zunächst der Bürstenhalter 114 in den Motortopf 13 eingebracht, bis dass die ersten Gegenflächen 126 des Bürstenhalters 114 mit den ersten Kontaktflächen 118 des Motortopfes 13 in Kontakt treten. Dabei treten die Zentriergegenflächen 154 in x-Richtung und die Zentriergegenflächen 156 in y-Richtung des Bürstenhalters 114 in Kontakt mit den Zentrierflächen 150 in x-Richtung und den Zentrierflächen 152 in y-Richtung des Motortopfes 13, wodurch der Bürstenhalter 114 bezogen auf die Längsachse L konzentrisch zum Motortopf 13 ausgerichtet wird.

Anschließend wird das Getriebegehäuse 14 in den Motortopf 13 eingebracht, bis dass die zweiten Gegenflächen 128 mit den zweiten Kontaktflächen 120 des Motortopfes 13 und die dritten Gegenflächen 130 mit den dritten Kontaktflächen 124 des Bürstenhalters 114 in Kontakt treten. Hierbei treten die Zentriergegenflächen 154, 156 in x- und in y-Richtung des Getriebegehäuses 14 mit den Zentrierflächen 150, 152 in x- und in y-Richtung des Motortopfes 13 in Kontakt, so dass auch das Getriebegehäuse 14 bezogen auf die Längsachse L konzentrisch zum Motortopf 13 ausgerichtet wird. Folglich wirken die Zentrierflächen 150, 152 in x- und in y-Richtung und die Zentriergegenflächen 154, 156 in x- und in y-Richtung auch in Bezug auf das Getriebegehäuse 14 zentrierend.

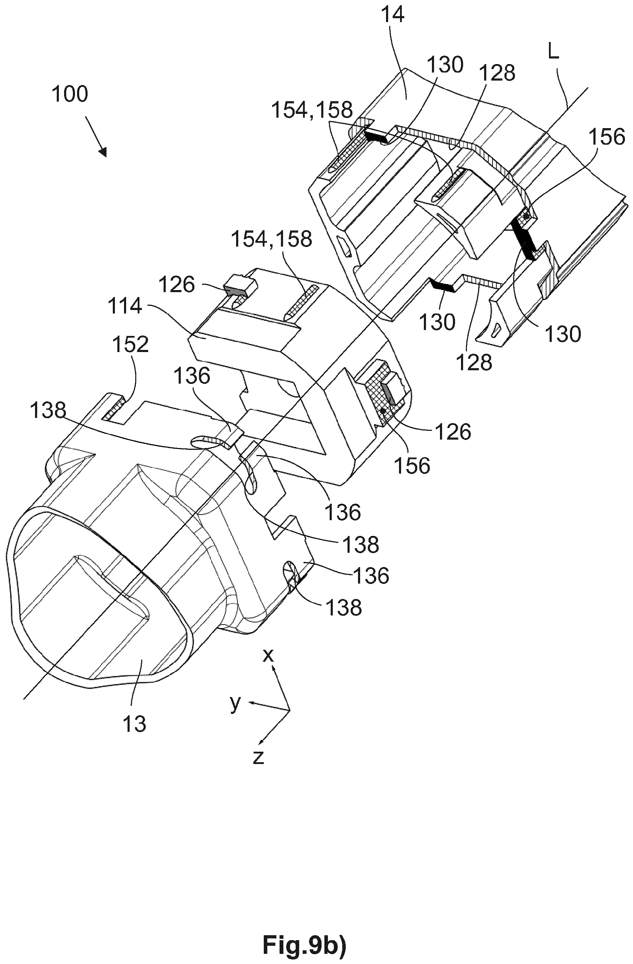

Insbesondere aus Figur 9a) ist zu entnehmen, dass der Motortopf 13 insgesamt drei erste Kontaktflächen 118 aufweist, die in einer Ausnehmung der im Querschnitt in etwa rechteckig verlaufenden Wandung des Motortopfes 13 angeordnet sind. Entsprechend weist der Bürstenhalter 114 drei erste Gegenflächen 126 auf, die auf Vorsprüngen des Bürstenhalters 114 angeordnet sind, welche in die Ausnehmungen des Motortopfes 13 eingreifen können. Auch das Getriebegehäuse 14 weist drei dritte Gegenflächen 130 auf, die in die Ausnehmungen des Motortopfes eingreifen können. Die Ausnehmungen sind so angeordnet, dass der Bürstenhalter 114 und das Getriebegehäuse 14 nur in einer Drehstellung in den Motortopf 13 eingebracht werden können. Um das Getriebegehäuse 14 am Motortopf 13 zu befestigen, werden die Crimpabschnitte 136 radial einwärts zur Längsachse L hin verbogen, so dass ein Formschluss zwischen dem Getriebegehäuse 14 und dem Motortopf 13 hergestellt wird. Die Crimpabschnitte 136 weisen Crimpflächen 138 (siehe Figur 9b)) auf, die in etwa in der x-y-Ebene liegen und mit Crimpgegenflächen 140 des Getriebegehäuses 14 (siehe Figur 9a)) in Kontakt treten. Die Crimpgegenflächen 140 verlaufen in etwa in der x-y-Ebene, ist aber etwas gegenüber der x-y-Ebene geneigt. Beim Vercrimpen bzw. beim Verbiegen der Crimpabschnitte 136 reiben die Crimpflächen 138 auf den Crimpgegenflächen 140, so dass zumindest anteilig auch ein Reibschluss bereitgestellt wird.

Da der Bürstenhalter 114 einerseits mit seinen ersten Gegenflächen 126 an den ersten Kontaktflächen 118 des Motortopfes 13 und andererseits mit seinen dritten Kontaktflächen 124 an den dritten Gegenflächen 130 des Getriebegehäuses 14 anliegt, ist seine Position innerhalb der Motor-Getriebe-Verbindungsanordnung 100 eindeutig festgelegt, sobald die Crimpabschnitte 136 verbogen worden sind. Aufgrund der Neigung der Crimpabschnitte 140 gegenüber der x-y-Ebene erfolgt eine finale Positionierung des Getriebegehäuses 14 und des Bürstenhalters 114 bezogen auf die Längsachse L. Die Quetschrippen 132 sind so ausgestaltet, dass sie beim Verbiegen der Crimpabschnitte 140 gestaucht werden, wodurch das Spiel der Motor-Getriebe-Verbindungsanordnung 100 entlang der Längsrichtung ausgeglichen wird.

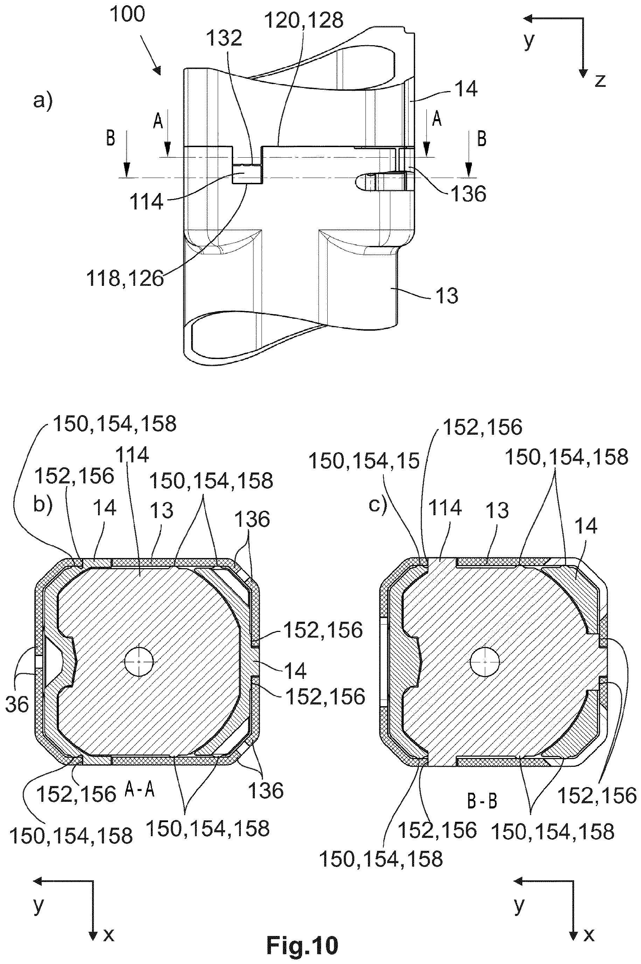

Die Figuren 10a) bis 10c) zeigen die Motor-Getriebe-Verbindungsanordnung 100 im zusammengebauten Zustand, wobei die Crimpabschnitte 136 noch nicht verbogen worden sind.

### Bezugszeichenliste

- 10: Hilfsantrieb
- 12: Antriebsmotor
- 13: Motortopf
- 14: Getriebegehäuse
- 16: Getriebeanordnung
- 18: Antriebswelle

- 20: Abtriebsrad
- 21: Innenverzahnung
- 22, 22₁, 22₂: Abtriebswelle
- 23: Außenverzahnung
- 24, 24₁, 24₂: Antriebswellen-Radiallager
- 26: Antriebswellen-Axiallager
- 28: Vorspannmittel

- 30: Antriebswellen-Verzahnungsabschnitt
- 32: Zwischenwelle
- 34, 34₁, 34₂: Zwischenwellen-Radiallager
- 36, 26₁, 36₂: Zwischenwellen-Axiallager
- 38: erster Zwischenwellen-Verzahnungsabschnitt

- 40: zweiter Zwischenwellen-Verzahnungsabschnitt
- 42: Abtriebsrad-Verzahnungsabschnitt
- 44, 44₁, 44₂: Abtriebsrad-Radiallager
- 46, 46₁, 46₂: Abtriebsrad-Axiallager
- 48: Schiebedach

- 50: proximales Ende
- 52: distales Ende
- 54, 54₁, 54₂: Bewegungsumwandlungseinheit
- 56: Riemen- oder Kettengetriebe
- 58: Antriebsrad
- 60: Riemen, Kette
- 62: Umlenkrad
- 64: Bauteil
- 66: Dachsegment
- 68: Schneckengetriebe

- 70: Gewindespindel
- 72: Zahnstange
- 74: Zahnrad
- 76: Fahrzeug

- 100: Motor-Getriebe-Verbindungsanordnung
- 114: Bürstenhalter
- 118: erste Kontaktflächen
- 120: zweite Kontaktflächen
- 124: dritte Kontaktflächen
- 126: erste Gegenflächen
- 128: zweite Gegenflächen
- 130: dritte Gegenflächen
- 132: Quetschrippen
- 136: Crimpabschnitt
- 138: Crimpflächen
- 140: Crimpgegenflächen

- 150: Zentrierflächen in x-Richtung
- 152: Zentrierflächen in y-Richtung
- 154: Zentriergegenflächen in x-Richtung
- 156: Zentriergegenflächen in y-Richtung
- 158: Erhöhungen

- L: Längsachse
- T: Drehachse
- X: Abmessung
- Y: Abmessung

## Patentansprüche

1. Getriebeanordnung für Hilfsantriebe (10) in einem Fahrzeug (76), insbesondere einem Kraftfahrzeug, umfassend
- eine mit einem Antriebsmotor (12) verbindbare Antriebswelle (18), auf welcher ein Antriebswellen-Verzahnungsabschnitt (30) angeordnet ist,
- zumindest eine Zwischenwelle (32), auf welcher ein erster Zwischenwellen-Verzahnungsabschnitt (38), der mit dem Antriebswellen-Verzahnungsabschnitt (30) in kämmendem Eingriff steht, und ein zweiter Zwischenwellen-Verzahnungsabschnitt (40) angeordnet ist, und
- ein Abtriebsrad (20) mit einem Abtriebsrad-Verzahnungsabschnitt (42), der mit dem zweiten Zwischenwellen-Verzahnungsabschnitt (40) in kämmendem Eingriff steht, wobei das Abtriebsrad (20) mit zumindest einer Abtriebswelle (22) drehfest verbindbar ist.

2. Getriebeanordnung nach Anspruch 1,
**dadurch gekennzeichnet, dass** die Antriebswelle (18) und die Abtriebswelle (22) parallel und versetzt zueinander verlaufen.

3. Getriebeanordnung nach einem der Ansprüche 1 oder 2,
**dadurch gekennzeichnet, dass** die Getriebeanordnung (16) ein Getriebegehäuse (14) umfasst, in welchem die Antriebswelle (18), die Zwischenwelle (32) und das Abtriebsrad (20) jeweils mit zumindest einem Axiallager (26, 36, 46) axial gelagert sind, wobei die Axiallager (26, 36, 46) Vorspannmittel (28) umfassen, um die Antriebswelle (18), die Zwischenwelle (32) und/oder das Abtriebsrad (20) axial vorzuspannen.

4. Hilfsantrieb in einem Fahrzeug (76), insbesondere in einem Kraftfahrzeug, umfassend
- eine Getriebeanordnung (16) nach einem der vorherigen Ansprüche,
- einen Antriebsmotor (12), der mit der Antriebswelle (18) verbunden ist, und
- zumindest eine Abtriebswelle (22), die mit einem proximalen Ende (50) drehfest mit den Abtriebsrad (20) verbunden ist.

5. Hilfsantrieb nach Anspruch 4,
**dadurch gekennzeichnet, dass** die Abtriebswelle (22) mit ihrem distalen Ende (52) mit einer Bewegungsumwandlungseinheit (54) zum Umwandeln der von der Abtriebswelle (22) bereitgestellten Drehbewegung in eine Längsbewegung zusammenwirkt.

6. Hilfsantrieb nach Anspruch 5,
**dadurch gekennzeichnet, dass** die Bewegungsumwandlungseinheit (54) eine Gewindespindel (70) und ein mit der Gewindespindel (70) zusammenwirkendes Schneckengetriebe (68) umfasst.

7. Hilfsantrieb nach Anspruch 5,
**dadurch gekennzeichnet, dass** die Bewegungsumwandlungseinheit (54) eine Zahnstange (72) und ein am distalen Ende drehfest mit der Abtriebswelle (22) verbundenes Zahnrad (74) umfasst, welches in kämmendem Eingriff mit der Zahnstange (72) steht.

8. Hilfsantrieb nach Anspruch 5,
**dadurch gekennzeichnet, dass** die Bewegungsumwandlungseinheit (54) ein Riemen- oder Kettengetriebe (56) mit einem am distalen Ende (52) drehfest mit der Abtriebswelle (22) verbundenen Antriebsrad (58) zum Antreiben eines Riemens oder einer Kette (60) umfasst.

9. Hilfsantrieb nach einem der Ansprüche 4 bis 8,
**dadurch gekennzeichnet, dass**
- eine erste Abtriebswelle (22₁) und eine zweite Abtriebswelle (22₂) an ihren jeweiligen proximalen Enden (50) mit dem Abtriebsrad (20) drehfest verbunden sind,
- die erste Abtriebswelle (22₁) mit ihrem distalen Ende (52) mit einer ersten Bewegungsumwandlungseinheit (54₁) und die zweite Abtriebswelle (22₂) mit ihrem distalen Ende (52) mit einer zweiten Bewegungsumwandlungseinheit (54₂) zum Umwandeln der von den Abtriebswellen bereitgestellten Drehbewegung in eine Längsbewegung zusammenwirken, und
- die erste und die zweite Bewegungsumwandlungseinheit (54₁, 54₂) mit einem Bauteil (64) des Fahrzeugs (76) verbunden sind, welches mit dem Hilfsantrieb (10) linear bewegbar ist.

10. Hilfsantrieb nach Anspruch 9,
**dadurch gekennzeichnet, dass** das Bauteil (64) ein Dachsegment (66) eines Schiebedaches (48), eine Dachjalousie oder ein Fahrzeugsitz ist.

11. Fahrzeug (76), insbesondere Kraftfahrzeug, mit einem Hilfsantrieb (10) nach einem der Ansprüche 4 bis 10.
